# EUROPEAN PATENT SPECIFICATION

(11) **EP 3 738 809 B1**
(45) Date of publication and mention of the grant of the patent: **29.06.2022**
(21) Application number: 20174525.4
(22) Date of filing: 13.05.2020
(51) Int. Cl.: B60K 7/00, B60K 17/04

(54) **MOTOR VEHICLE TRANSMISSION, AND MOTOR VEHICLE AXLE PROVIDED WITH SUCH TRANSMISSION**
KRAFTFAHRZEUG-GETRIEBE UND KRAFTFAHRZEUG-ACHSE MIT EINEM SOLCHEN GETRIEBE
TRANSMISSION DE VÉHICULE AUTOMOBILE ET ESSIEU DE VÉHICULE AUTOMOBILE ÉQUIPÉ D'UNE TELLE TRANSMISSION

(30) Priority: 13.05.2019 IT 201900006759
(43) Date of publication of application: 18.11.2020
(73) Proprietor: FPT Industrial S.p.A., 10156 Torino (IT)
(72) Inventor: MANTOVAN, Alessandro, 10050 SANT'ANTONINO DI SUSA (TO) (IT); TESSITORE, Marco, 10141 TORINO (IT)
(74) Representative: Lovino, Paolo

(56) References cited:
- CN-A- 102 555 771
- CN-U- 204 886 545
- JP-A- 2013 071 612
- US-A1- 2006 011 405

## Description

### CROSS-REFERENCE TO RELATED APPLICATIONS

This patent application claims priority from Italian patent application no. 102019000006759 filed on 13/05/2019.

### TECHNICAL FIELD

The invention relates to a motor vehicle transmission, in particular for electric drive.

### BACKGROUND ART

In automotive applications, epicyclic transmissions are used for the transmission of motion from an electric drive motor to the drive wheels of the motor vehicle. Generally speaking, epicyclic transmissions are capable of transmitting a rotary motion between an input shaft and an output shaft, which are coaxial to one another and rotate at different speeds. They are very effective in reducing the gear ratio, though ensuring a small weight as well as small size.

In order to further reduce the gear ratio between the output shaft and the input shaft, epicyclic transmissions can be used, which have so-called compound planetary gears. This type of transmission basically consists of two transmissions arranged in a train-like manner and comprises a sun gear, which is caused to rotate by the input shaft, and a plurality of planetary assemblies, which are arranged about the rotation axis of the sun gear and are supported by a so-called carrier. Each planetary assembly comprises a pair of planetary gears, which are coaxial, rotate together relative to the carrier and have different diameters. One of these planetary gears (for example the one with the largest diameter) meshes with the sun gear. In known solutions, the other planetary gear meshes with the inner teeth of a fixed ring, while the carrier rotates about the rotation axis of the sun gear and causes the rotation of the output shaft.

Transmissions of the type described above increasingly need to be applied in the automotive industry and to be improved in order to reduce the overall dimensions / sizes of the epicyclic transmission.

JP2013071612A, in figure 6, discloses a wheel drive unit having an epicyclic transmission, connecting an input shaft to an output shaft, and a relative displacement absorbing drive coupling structure, which couples an output sun gear of the transmission to the output shaft. The latter is loosely fitted in a hollow hole of the input shaft. CN204886545U discloses a drive unit according to the features in the preamble of claim 1.

### DISCLOSURE OF INVENTION

The object of the invention is to provide an epicyclic transmission of a motor vehicle, which fulfils the above-mentioned needs in a simple and economic manner.

According to the invention, there is provided a motor vehicle transmission as defined in claim 1. According to the invention, there is provided a motor vehicle axle as defined in claim 8.

### BRIEF DESCRIPTION OF THE DRAWINGS

The invention will be best understood upon perusal of the following detailed description of a preferred embodiment, which is provided by way of non-limiting example, with reference to the accompanying drawings, wherein:
- figure 1 is a schematic view of a preferred embodiment of the motor vehicle transmission according to the invention;
- figure 2 shows a schematic front view of a detail of the transmission of figure 1;
- figure 3 is a schematic top view of a motor vehicle having an axle provided with the transmission of figure 1;
- figure 4 shows a cross-sectional view, on a larger scale and with schematic parts, of the axle of figure 3; and
- figure 5 shows, on a further larger scale, a detail of figure 4.

### BEST MODE FOR CARRYING OUT THE INVENTION

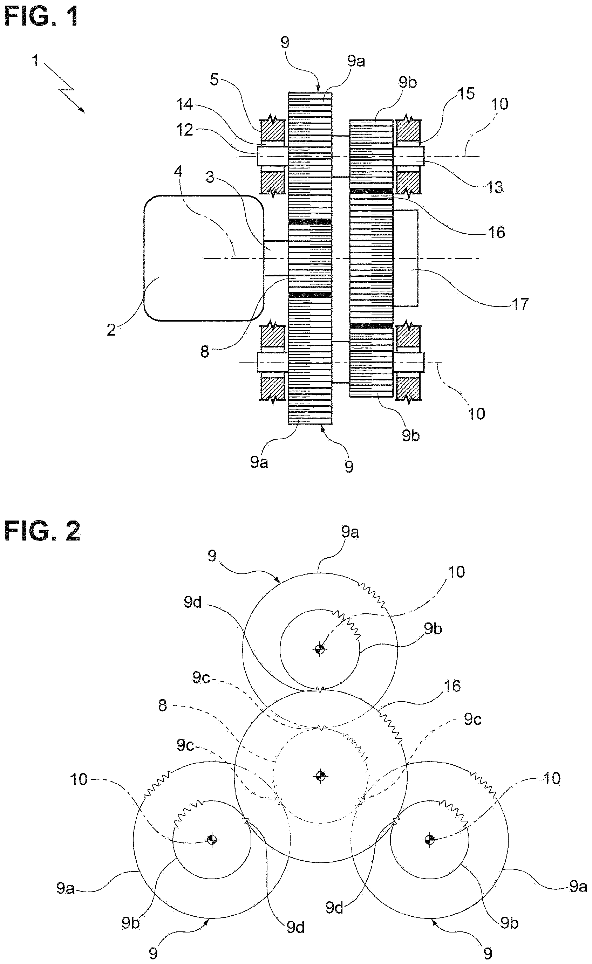

With reference to the schematic representation of figure 1, reference number 1 indicates a motor vehicle transmission, which is operated by and electric drive motor 2. The transmission comprises an input shaft 3, which has an axis and, because of the action of the electric motor 2, can rotate about the axis relative to a fixed structure 5, which supports the electric motor 2 and the transmission 1. In particular, the input shaft 3 is coaxial and angularly fixed relative to a rotor of the electric motor 2.

The transmission 1 is an epicyclic transmission and comprises a sun gear 8, which is coaxial and angularly fixed relative to the input shaft 3 and is preferably fitted on an outer surface of the input shaft 3. The transmission 1 further comprises a plurality of planetary assemblies 9, which are arranged about the axis in positions equally spaced apart from one another about the axis 4 and rotate about respective axes 10, which are parallel and eccentric relative to the axis 4.

According to a preferred aspect of the invention, the axes 10 are fixed relative to the structure 5, namely they do not rotate about the axis 4. In other words, it is as if the transmission 1 has a non-rotating carrier.

In the specific example shown in figure 2, there are three assemblies 9.

With reference to figure 1, again, each assembly 9 comprises two planetary gears 9a and 9b, also known as compound planetary gears. The gears 9a and 9b are coaxial and angularly fixed relative to one another and have different diameters. In each assembly 9, the planetary gear 9a has a larger diameter and meshes with the sun gear 8, whereas the planetary gear 9b has a smaller diameter.

Each assembly 9 comprises two end pins 12 and 13, which are axially opposite one another, are angularly fixed relative to the planetary gears 9a and 9b, respectively, and project so as to be coupled to the structure 5 by means of respective bearings 14 and 15. In particular, the bearings 14 and 15 are rolling bearings, for example roller bearings.

According to a preferred aspect of the invention, the planetary gears 9b do not mesh with a crown gear (namely, with the inner teeth of a ring), but they mesh with a sun gear 16 (namely, with the outer teeth of a toothed wheel). The sun gear 16 is coaxial and rotary relative to the sun gear 8 and has a greater diameter than the sun gear 8. The sun gear 16, in turn, transmits the rotation motion to an output member 17. The sun gear 16 and the output member 17 are coaxial and angularly fixed relative to one another.

By way of example, the transmission 1 has a gear ratio that is greater than seven.

The teeth of the sun gears 8 and 16 and of the planetary gears 9a and 9b are preferably defined by helical teeth.

In particular, the number of teeth of the sun gears 8 and 16 can perfectly be divided by the number of assemblies 9 present in the transmission 1. In other words, in this specific case, the number of teeth of the sun gears 8 and 16 can be divided by three.

According to figure 2, the assemblies 9 are preferably manufactured in such a way that each gear 9a has a tooth 9c aligned, in a radial direction, with a tooth 9d of the corresponding gear 9b (taking into account a middle plane, at half the axial thickness of the gears 9a, 9b), so that the assemblies 9 can be installed in a reference position, in which the teeth 9c and 9d radially face the centre, namely the axis 4.

In this condition, an ideal balancing of the two sun gears 8 and 16 relative to radial loads can be obtained, so that the bearings supporting the sun gears 8 and 16 are less stressed and can better resist high speeds.

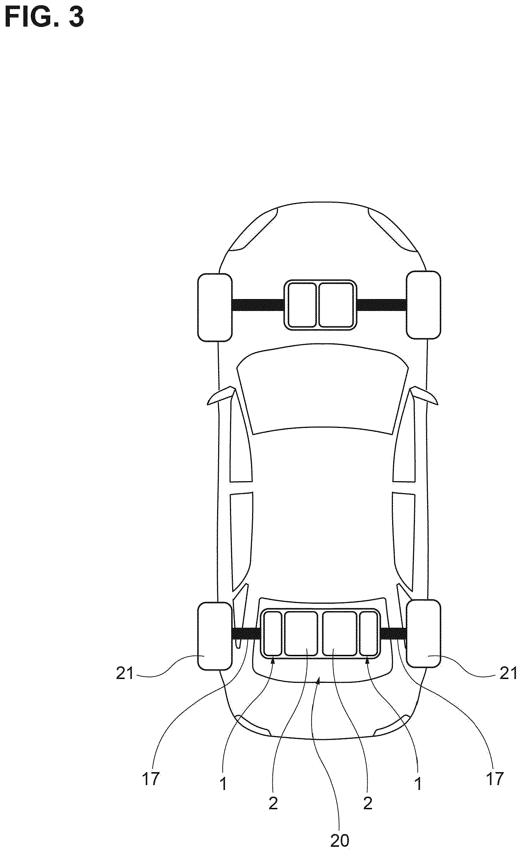

With reference to figure 3, the transmission 1 and the electric motor 2 are advantageously used in an axle 20 of a motor vehicle, for example in a rear axle.

In particular, the axle 20 comprises two wheels 21, two electric motors 2 and two transmissions 1, which are operated independently of one another by the electric motors 2. The output member 17 of each transmission 1 is coupled to a corresponding wheel 21, in a way that is not shown herein, so as to cause the rotation of said wheel 21.

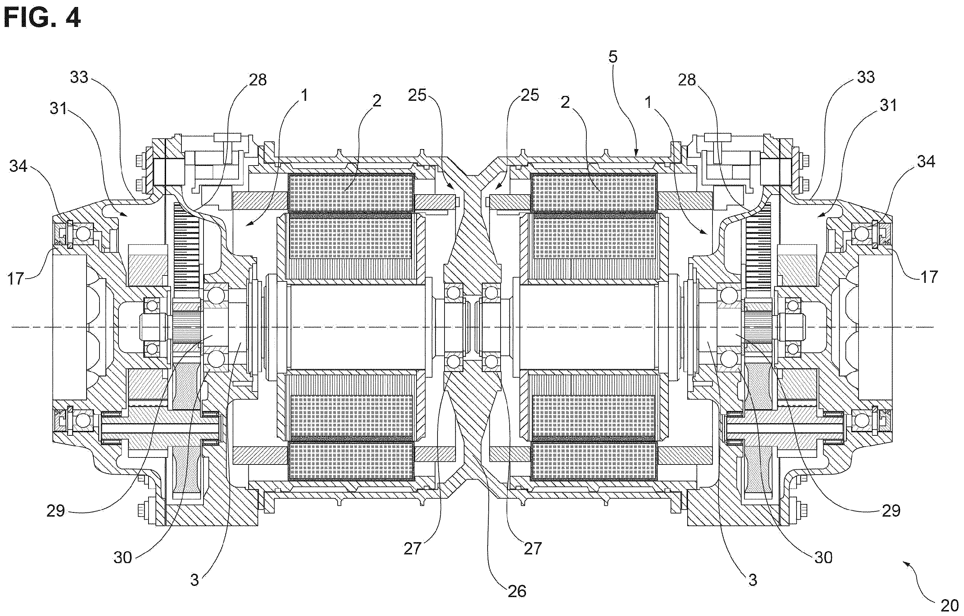

Figure 4 shows some preferred constructive details of the structure 5 and of the transmission 1. In particular, the structure 5 has two cavities 25, which respectively house the electric motors 2 and are separated from one another by a wall 26, which supports the rotors of the electric motors 2 by means of the respective bearings 27, at the axial end opposite the one where the transmissions 1 are placed.

On the axial side opposite the wall 26, the cavities 25 are closed by respective walls 28, which are crossed by the input shafts 3. In particular, each wall 28 supports a portion 29 of the input shaft 3 by means of a bearing 30, preferably a rolling bearing.

The structure 5 further has two chambers 31, which are axially delimited by the walls 29 and house the gears of the transmission 1. The structure 5 comprises two bell-shaped bodies 33, which delimit the chambers 31, are fixed relative to the walls 28 and support the output members 17 by means of respective bearings 34, preferably rolling bearings.

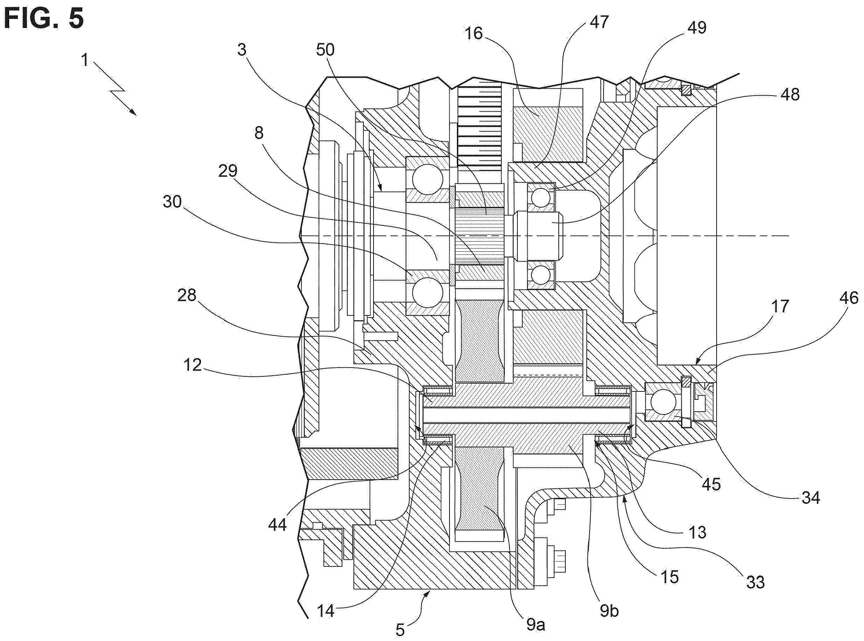

With reference to figure 5, for each one of the two transmissions 1, the wall 28 and the body 33 have respective seats 44 and 45, which respectively house the bearings 14 and 15. According to a variant which is not shown herein, the seats 44 and 45 are obtained in the assemblies 9, whereas the pins 12, 13 are carried by the structure 5.

According to a preferred solution, the end pins 12, 13 and/or the seats 44, 45 directly define the rolling tracks for the rolling bodies of the bearings 14 and 15, which, therefore, at least partially lack dedicated rolling tracks.

Each output member 17 preferably comprises two end portions 46 and 47, which are axially opposite one another and have a substantially cylindrical tubular shape. The portion 46 has an outer surface, which is coupled to the body 33 through the bearing 34. On the other hand, the portion 47 preferably has a smaller diameter than the portion 46, houses an axial end portion 48 of the input shaft 3 and has an inner surface, which is coupled to the axial end portion 48 through a bearing 49. In other words, the portion 47 is supported by the structure 5 through the interposition of the input shaft 3 and of the bearings 30 and 49.

The sun gear 8 is fitted, in an angularly fixed position, on an intermediate portion 50 of the input shaft 3, between the portions 48 and 29.

The sun gear 16 is preferably fitted, in an angularly fixed manner, on an outer surface of the portion 47 of the output member 17.

Owing to the above, a person skilled in the art clearly understands the advantages of the configuration of the transmission 1 and, as a consequence, of the axle 20. In particular, the fact of operating the output member 17 by means of the sun gear 16, without providing any crown gear, allows the radial dimensions of the transmission 1 to be reduced. In other words, the transmission 1 is capable of transmitting high mechanical power values with small size. Moreover, in the transmission 1, the input shaft 3 and the output member 17 are coaxial, so that the transmission 1 is relatively simple from the constructive and installation point of view.

By locking the rotation of the assemblies 9 about the axis 4, a configuration with a fixed carrier is obtained, which eliminates the revolution motion of the assemblies 9 about the axis 4 and, hence, reduces the centrifugal forces acting upon the assemblies 9, so that the transmission 1 can advantageously be used in applications with high rotation speeds.

Furthermore, as already mentioned above, the positions shown in figure 2 allow for a balancing of the radial forces acting upon the bearings.

Owing to the above, it is evident that transmission 1 and the axle 20 can be subject to changes and variations, without going beyond the scope of protection set forth in the appended claims.

In particular, the constructive features of the structure 5 could be different from the ones described by way of example with reference to figures 4 and 5. Furthermore, the electric motor 2 could be spaced apart from the axle 20 and/or operate the input shaft 3 of the transmission 1 by means of further transmission elements; and/or a differential device could be provided in order to operate both wheels 21 by means of one single electric motor 2.

## Claims

1. A motor vehicle transmission (1) comprising:
- a supporting structure (5);
- an input sun gear (8), which has a transmission axis (4) and is rotatable about said transmission axis (4) with respect to said supporting structure (5);
- a plurality of planetary assemblies (9) arranged about said transmission axis (4), rotatable about respective rotation axes (10) parallel to said transmission axis (4) and each comprising a first and a second planetary gear (9a, 9b), which are coaxial and angularly fixed to one another; said first planetary gears (9a) meshing with said input sun gear (8); said rotation axes (10) being in positions fixed with respect to said supporting structure (5) ;
- an output sun gear (16), which is coaxial with, and is rotatable with respect to, said input sun gear (8); said second planetary gears (9b) meshing with said output sun gear (16);
- an input shaft (3) and an output member (17), which are coaxial with, and are angularly fixed with respect to, said input planetary gear (8) and, respectively, said output planetary gear (16);
wherein said input shaft (3) and said output member (17) comprise a first end portion (48) and, respectively, a second end portion (47) which are coupled to one another via a first bearing (49);
**characterised in that** said input and output sun gears (8, 16) have numbers of teeth that are exactly divisible by the number of planetary assemblies (9); and, in each said planetary assembly (9), said first planetary gear (9a) comprises a tooth (9c), which is aligned in a radial direction with a tooth (9d) of the corresponding said second planetary gear (9b).

2. The motor vehicle transmission according to claim 1, **characterised in that** each said planetary assembly (9) comprises two end portions (12, 13), which are coaxial with, and axially opposite to, one another along the corresponding rotation axis (10), are angularly fixed with respect to the corresponding first and second planetary gears (9a, 9b), and are coupled via respective bearings (14, 15) to said supporting structure (5).

3. The motor vehicle transmission according to claim 1, **characterised in that** said second end portion (47) is coupled to said supporting structure (5) via said input shaft (3).

4. The motor vehicle transmission according to claim 3, **characterised in that** said input shaft (3) comprises a supported portion (29) coupled to said supporting structure (5) via a second bearing (30); said input sun gear (8) being fitted in a fixed angular position on an intermediate portion (50) of said input shaft (3), between said first end portion (48) and said supported portion (29).

5. The motor vehicle transmission according to any one of the claims 1 to 4, **characterised in that** said second end portion (47) houses said first end portion (48).

6. The motor vehicle transmission according to claim 5, **characterised in that** said output sun gear (16) is fitted in a fixed angular position on said second end portion (47) .

7. The motor vehicle transmission according to any one of the claims 1 to 6, **characterised in that** said output member (17) comprises a third end portion (46), which is axially opposite to said second end portion (47) and has an outer surface coupled to said supporting structure (5) via a third bearing (34).

8. A motor vehicle axle (20) comprising at least one motor vehicle transmission (1) according to any one of the preceding claims.

9. The motor vehicle axle according to claim 8, **characterised by** comprising at least one electric drive motor (2), which drives said input sun gear (8).

10. The motor vehicle axle according to claim 9, **characterised in that** said electric drive motor (2) is coaxial with said input sun gear (8).

11. The motor vehicle axle according to claim 10, **characterised in that** said electric drive motor (2) is coupled to said input sun gear (8) only via an input shaft (3) .

## Patentansprüche

1. Kraftfahrzeuggetriebe (1), das Folgendes umfasst:
- eine Tragstruktur (5);
- ein Eingangssonnenrad (8), das eine Getriebeachse (4) besitzt und um die Getriebeachse (4) in Bezug auf die Tragstruktur (5) drehbar ist;
- mehrere Planetenanordnungen (9), die um die Getriebeachse (4) um jeweilige Drehachsen (10), die zur Getriebeachse (4) parallel sind, drehbar angeordnet sind und jeweils ein erstes und ein zweites Planetenrad (9a, 9b) umfassen, die koaxial und in Winkelrichtung aneinander befestigt sind; wobei die ersten Planetenräder (9a) mit dem Eingangssonnenrad (8) kämmen und die Drehachsen (10) sich in Stellungen befinden, die in Bezug auf die Tragstruktur (5) fest sind;
- ein Ausgangssonnenrad (16), das mit dem Eingangssonnenrad (8) koaxial und in Bezug darauf drehbar ist; wobei die zweiten Planetenräder (9b) mit dem Ausgangssonnenrad (16) kämmen; und
- eine Eingangswelle (3) und ein Ausgangselement (17), die mit dem Eingangsplanetenrad (8) bzw. dem Ausgangsplanetenrad (16) koaxial und in Bezug darauf drehfest sind; wobei
die Eingangswelle (3) und das Ausgangselement (17) einen ersten Endabschnitt (48) bzw. einen zweiten Endabschnitt (47) umfassen, die mittels eines ersten Lagers (49) aneinander gekoppelt sind;
**dadurch gekennzeichnet, dass** die Eingangs- und die Ausgangssonnenräder (8, 16) jeweils eine Anzahl von Zähnen besitzen, die durch die Anzahl von Planetenanordnungen (9) genau teilbar sind; und in jeder Planetenanordnung (9) das erste Planetenrad (9a) einen Zahn (9c) umfasst, der in einer radialen Richtung auf einen Zahn (9d) des entsprechenden zweiten Planetenrads (9b) ausgerichtet ist.

2. Kraftfahrzeuggetriebe nach Anspruch 1, **dadurch gekennzeichnet, dass** jede Planetenanordnung (9) zwei Endabschnitte (12, 13) umfasst, die mit der entsprechenden Drehachse (10) koaxial sind und sich entlang ihrer axial gegenüberliegen, in Bezug auf die entsprechenden ersten und zweiten Planetenräder (9a, 9b) drehfest sind und mittels jeweiliger Lager (14, 15) an die Tragstruktur (5) gekoppelt sind.

3. Kraftfahrzeuggetriebe nach Anspruch 1, **dadurch gekennzeichnet, dass** der zweite Endabschnitt (47) mittels der Eingangswelle (3) an die Tragstruktur (5) gekoppelt ist.

4. Kraftfahrzeuggetriebe nach Anspruch 3, **dadurch gekennzeichnet, dass** die Eingangswelle (3) einen getragenen Abschnitt (29) umfasst, der mittels eines zweiten Lagers (30) an die Tragstruktur (5) gekoppelt ist; wobei das Eingangssonnenrad (8) in einer festen Winkelstellung zwischen dem ersten Endabschnitt (48) und dem getragenen Abschnitt (29) in einen Zwischenabschnitt (50) der Eingangswelle (3) eingepasst ist.

5. Kraftfahrzeuggetriebe nach einem der Ansprüche 1 bis 4, **dadurch gekennzeichnet, dass** der zweite Endabschnitt (47) den ersten Endabschnitt (48) aufnimmt.

6. Kraftfahrzeuggetriebe nach Anspruch 5, **dadurch gekennzeichnet, dass** das Ausgangssonnenrad (16) in einer festen Winkelstellung in den zweiten Endabschnitt (47) eingepasst ist.

7. Kraftfahrzeuggetriebe nach einem der Ansprüche 1 bis 6, **dadurch gekennzeichnet, dass** das Ausgangselement (17) einen dritten Endabschnitt (46) umfasst, der dem zweiten Endabschnitt (47) axial gegenüberliegt und eine Außenoberfläche besitzt, die mittels eines dritten Lagers (34) an die Tragstruktur (5) gekoppelt ist.

8. Kraftfahrzeugachse (20), die mindestens ein Kraftfahrzeuggetriebe (1) nach einem der vorhergehenden Ansprüche umfasst.

9. Kraftfahrzeugachse nach Anspruch 8, **gekennzeichnet durch** mindestens einen elektrischen Antriebsmotor (2), der das Eingangssonnenrad (8) antreibt.

10. Kraftfahrzeugachse nach Anspruch 9, **dadurch gekennzeichnet, dass** der elektrische Antriebsmotor (2) mit dem Eingangssonnenrad (8) koaxial ist.

11. Kraftfahrzeugachse nach Anspruch 10, **dadurch gekennzeichnet, dass** der elektrische Antriebsmotor (2) lediglich mittels einer Eingangswelle (3) an das Eingangssonnenrad (8) gekoppelt ist.

## Revendications

1. Transmission de véhicule à moteur (1) comprenant :
une structure de support (5) ;
un planétaire d'entrée (8) qui a un axe de transmission (4) et peut tourner autour dudit axe de transmission (4) par rapport à ladite structure de support (5) ;
une pluralité d'ensembles de planétaires (9) agencés autour dudit axe de transmission (4), pouvant tourner autour des axes de rotation (10) respectifs parallèles audit axe de transmission (4) et comprenant chacun un premier et un second engrenage planétaire (9a, 9b), qui sont coaxiaux et angulairement fixés entre eux ; lesdits premiers engrenages planétaires (9a) s'engrenant avec ledit planétaire d'entrée (8) ; lesdits axes de rotation (10) étant dans des positions fixes par rapport à ladite structure de support (5) ;
un planétaire de sortie (16) qui est coaxial avec et peut tourner par rapport audit planétaire d'entrée (8) ; lesdits seconds engrenages planétaires (9b) s'engrenant avec ledit planétaire de sortie (16) ;
un arbre d'entrée (3) et un élément de sortie (17) qui sont coaxiaux avec et sont angulairement fixes par rapport audit planétaire d'entrée (8) et respectivement, audit planétaire de sortie (16) ;
dans laquelle ledit arbre d'entrée (3) et ledit élément de sortie (17) comprennent une première partie d'extrémité (48) et respectivement une deuxième partie d'extrémité (47) qui sont couplées entre elles, via un premier palier (49) ;
**caractérisée en ce que** lesdits planétaires d'entrée et de sortie (8, 16) ont des nombres de dents qui sont exactement divisibles par le nombre d'ensembles de planétaires (9) ; et dans chacun desdits ensembles de planétaires (9), ledit premier engrenage planétaire (9a) comprend une dent (9c) qui est alignée dans une direction radiale avec une dent (9d) dudit second engrenage planétaire (9b) correspondant.

2. Transmission de véhicule à moteur selon la revendication 1, **caractérisée en ce que** chacun desdits ensembles de planétaires (9) comprend deux parties d'extrémité (12, 13) qui sont coaxiales avec et axialement opposées entre elles le long de l'axe de rotation (10) correspondant, sont angulairement fixes par rapport aux premier et second engrenages planétaires (9a, 9b) et sont couplées via des paliers (14, 15) respectifs à ladite structure de support (5).

3. Transmission de véhicule à moteur selon la revendication 1, **caractérisée en ce que** ladite deuxième partie d'extrémité (47) est couplée à ladite structure de support (5) via ledit arbre d'entrée (3).

4. Transmission de véhicule à moteur selon la revendication 3, **caractérisée en ce que** ledit arbre d'entrée (3) comprend une partie supportée (29) couplée à ladite structure de support (5) via un deuxième palier (30) ; ledit planétaire d'entrée (8) étant monté dans une position angulaire fixe sur une partie intermédiaire (50) dudit arbre d'entrée (3), entre ladite première partie d'extrémité (48) et ladite partie de support (29).

5. Transmission de véhicule à moteur selon l'une quelconque des revendications 1 à 4, **caractérisé en ce que** ladite deuxième partie d'extrémité (47) loge ladite première partie d'extrémité (48).

6. Transmission de véhicule à moteur selon la revendication 5, **caractérisée en ce que** ledit planétaire de sortie (16) est monté dans une position angulaire fixe sur ladite deuxième partie d'extrémité (47).

7. Transmission de véhicule à moteur selon l'une quelconque des revendications 1 à 6, **caractérisée en ce que** ledit élément de sortie (17) comprend une troisième partie d'extrémité (46) qui est axialement opposée à ladite deuxième partie d'extrémité (47) et a une surface externe couplée à ladite structure de support (5) via un troisième palier (34).

8. Essieu de véhicule à moteur (20) comprenant au moins une transmission de véhicule à moteur (1) selon l'une quelconque des revendications précédentes.

9. Essieu de véhicule à moteur selon la revendication 8, **caractérisé en ce qu'**il comprend au moins un moteur d'entraînement électrique (2), qui entraîne ledit planétaire d'entrée (8).

10. Essieu de véhicule à moteur selon la revendication 9, **caractérisé en ce que** ledit moteur d'entraînement électrique (2) est coaxial avec ledit planétaire d'entrée (8).

11. Essieu de véhicule à moteur selon la revendication 10, **caractérisé en ce que** ledit moteur d'entraînement électrique (2) est couplé audit planétaire d'entrée (8) uniquement via un arbre d'entrée (3).
